# EUROPÄISCHE PATENTSCHRIFT

(11) **EP 0 400 401 B1**
(45) Veröffentlichungstag und Bekanntmachung des Hinweises auf die Patenterteilung: **06.11.1996**
(21) Anmeldenummer: 90109297.3
(22) Anmeldetag: 17.05.1990
(51) Int. Cl.: G05D 23/19, F24F 11/04

(54) **Vorrichtung zum Regeln eines Volumenstroms in einem Führungsrohr**
Volume flowregulator for a duct
Régulateur de débit volumétrique dans une conduite

(30) Priorität: 29.05.1989 DE 3917360
(43) Veröffentlichungstag der Anmeldung: 05.12.1990
(73) Patentinhaber: SCHAKO METALLWARENFABRIK FERDINAND SCHAD KG, D-78600 Kolbingen (DE)
(72) Erfinder: Zeller, Adalbert, D-7201 Kolbingen (DE); Kurrle, Hermann, D-7201 Kolbingen (DE); Ruf, Wolfgang, D-7201 Kolbingen (DE)
(74) Vertreter: Weiss, Peter, Dr. rer.nat.

(56) Entgegenhaltungen:
- EP-A- 0 122 466
- WO-A-89/33554
- US-A- 1 724 990
- US-A- 4 291 832
- US-A- 4 449 664
- US-A- 4 545 363
- US-A- 4 553 695

## Beschreibung

Die Erfindung betrifft eine Vorrichtung zum Regeln eines Volumenstromes in einem Führungsrohr, insbesondere zum Regeln des Luftvolumenstromes in einem Lüftungssystem bzw. einer Klimaanlage, wobei eine Einstellklappe um eine Drehachse drehbar, in dem Führungsrohr angeordnet, dem Führungsrohr eine Einstellvorrichtung für die Einstellklappe und der Einstellvorrichtung ein Regler zugeordnet ist, wobei die Einstellvorrichtung über Getriebeelemente mit dem Regler gekoppelt ist.

Wesentliche Aufgabe von Lüftungssystemen ist das Einbringen frischer, gereinigter Luft in beispielsweise Arbeits- und Aufenthaltsräume sowie das Abführen verbrauchter und schadstoffhaltiger Luft. Je nach gewünschtem Bedarf können diese Anlagen zusätzlich heizen, kühlen, be- und entfeuchten.

Da das Wohlbefinden des Menschen erheblich von diesen Lüftungssystemen bzw. Klimaanlagen abhängt, ist deren Regelung von erheblicher Bedeutung. Ein derartiger Volumenstromregler ist beispielsweise in der Deutschen Patentschrift 33 36 911 aufgezeigt. Dort wird eine entsprechende Einstellklappe von einer Vorrichtung zum Messen der Strömung der Luft gesteuert, wobei über den Strömungsquerschnitt des Gasführungsrohres verteilt angeordnete Sammelrohre mit Strömungsöffnungen vorgesehen sind, in die die Luft einströmt. Dabei sind sämtliche Strömungsaufnahmeöffnungen der Strömung entgegengerichtet, wobei die Strömung zu Sammelrohren geleitet wird, die mit einem rohrförmigen Sammelgehäuse verbunden sind. Dessen Achse erstreckt sich parallel zur Achse des Gasführungsrohres. Ferner ist ihm eine entsprechende Meßsonde zugeordnet. Diese Vorrichtung hat sich in der Praxis sehr bewährt, wobei aber die Steuerung der Einstellklappe über das relativ komplizierte Meßsystem erfolgt.

Aus der US-A-4 545 363 ist ein Steuerungssystem zum Steuern der Bewegung einer Einstellklappe bekannt, wobei ein federbelasteter Arm einerseits mit einer Jalousie aus Lamellen über verschiedene Schiebeelemente und andererseits mit einem Antrieb zum linearen Verschieben dieses Armes verbunden ist. Eine Drehung einer Einstellklappe ist mit diesem linear verschiebbaren Arm nicht möglich.

Demgegenüber zeigt die EP-A-0 122 466 eine Vorrichtung zum Regeln eines Volumenstromes in einem Führungsrohr, wobei ein den Strömungsquerschnitt verengendes Element durch eine federvorgespannte, verschiebbare Halterung in veränderlicher Stellung gehalten wird. Die Feder zwischen der Halterung und dem den Strömungsquerschnitt verengenden Element erlaubt jedoch ein Flattern dieses Elementes bei einem unterschiedlichen Luftvolumenstrom.

Ferner ist aus der US-A-449 664 ein Volumenstromregler für Klimaanlagen bekannt, bei dem ein rechteckförmiger Querschnitt mittels einer Klappe außerhalb über einen Elektromotor betriebene Spindel geöffnet oder geschlossen werden kann. Diese äußerst starre Anordnung hat zum Nachteil, daß beispielsweise eine Dämpfung oder eine manuelle Einstellung nicht möglich ist, und nicht klar erkennbar ist in welcher Position sich die Klappe befindet.

Der Erfinder hat sich zur Aufgabe gestellt, eine Vorrichtung der oben genannten Art zu entwickeln, mittels welcher eine wesentlich direktere Ansteuerung der Einstellklappe möglich ist, welche zudem einfach und ohne Komplikationen bzw. Verschleiß arbeitet.

Zur Lösung dieser Aufgabe führt, daß ein der Drehachse der Einstellklappe aufsitzendes Zahnrad von der Zahnleiste direkt angegriffen, oder eine Zahnleiste über eine Verbindungskette entweder mit dem Zahnrad oder mit Umlenkrollen zum Drehen der Drehachse verbunden ist und daß in die Zahnung der Zahnleiste bzw. Verbindungskette eine Zahnhalbrundescheibe, ein Zahnrad od.dgl. eingreift, welches einer Welle eines im Regler angeordneten Antriebes aufsitzt und der Einstellvorrichtung eine Skalierung, und in der Einstellvorrichtung zumindest einem der Getriebeelemente zum Einstellen der Einstellklappe ein Stoßdämpfer zugeordnet ist.

Bevorzugt befinden sich Einstellvorrichtung und Regler außerhalb des Führungsrohres, so daß sie von dem das Führungsrohr durchfließenden Volumenstrom nicht beeinflußt werden. Hierdurch kommt es auch nicht zu Verschmutzungen od. dgl. der Regeleinheit.

Die Steuerung erfolgt ausschließlich über den Raumthermostat, so daß hier eine direkte Ansteuerung des Reglers möglich erscheint. Der Raumthermostat gibt dann entsprechende Schaltsignale an den Regler ab, wenn die Raumtemperatur zu niedrig oder zu hoch ist. Damit wird dann die Einstellklappe über die Einstellvorrichtung entsprechend geschlossen bzw. geöffnet. Dies ist sehr einfach und bietet in der Praxis keinerlei Komplikationen. Eine Wartung ist nur in den seltensten Fällen notwendig.

Bevorzugt soll die Einstellvorrichtung über Getriebeelemente mit dem Regler gekoppelt sein. Dabei sitzt sowohl die Einstellvorrichtung wie auch der Regler gemeinsam dem Führungsrohr auf, so daß eine kompakte Einheit gebildet ist.

In einer Ausführungsform der Erfindung kann der Drehachse der Einstellklappe ein Zahnrad od. dgl. aufsitzen, welches direkt von einer Zahnleiste angegriffen wird, die linear verschiebbar der Einstellvorrichtung zugeordnet ist. Es sind jedoch auch andere Getriebeelemente, wie beispielsweise eine mit der linear bewegbaren Zahnleiste verbundene Kette über entsprechende Umlenkrollen möglich. Hier soll dem erfinderischen Gedanken keine Grenze gesetzt sein.

Bevorzugt soll den Getriebeelementen jedoch ein Stoßdämpfer zugeordnet sein, über welchen sich der Volumenstromregler exakt einjustieren läßt, wobei dann eine sehr hohe Regelgenauigkeit erreicht wird.

Ist als Getriebeelement eine Zahnleiste vorgesehen, so soll mit der Welle eines dem Regler zugeordneten Antriebes eine Zahnhalbrundscheibe, ein Zahnrad od. dgl. verbunden sein, wobei dessen Zahnung eine Zahnung dieser Zahnleiste angreift und so die lineare Bewegung der Zahnleiste verursacht. Auch hier sind jedoch andere Kopplungen denkbar.

Als Antrieb wird bevorzugt ein Elektromotor benutzt, welcher von 1 bis 10 Volt schaltbar ist.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
- Fig. 1: eine Seitenansicht eines erfindungsgemäßen Volumenstromreglers, montiert auf einen Rohrabschnitt eines entsprechenden Lüftungssystems;
- Fig. 2: eine Draufsicht auf den Volumenstromregler gemäß Figur 1.

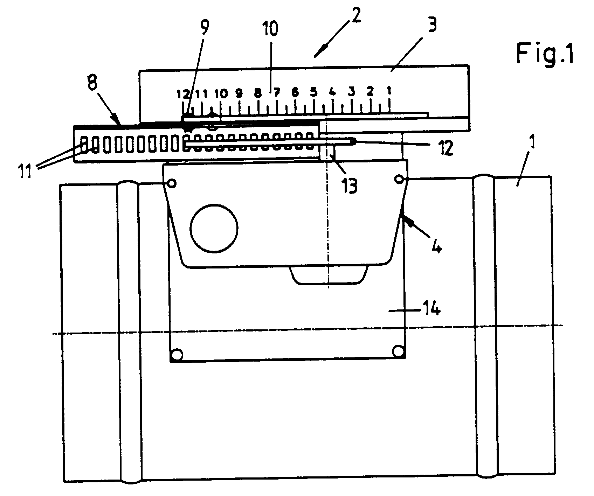

Gemäß Figur 1 sitzt einem Rohrabschnitt 1 eines nicht näher dargestellten Lüftungs- bzw. Klimasystems ein Volumenstromregler 2 auf. Dieser Volumenstromregler 2 besteht im wesentlichen aus einer eigentlichen Einstellvorrichtung 3 und einem Regler 4.

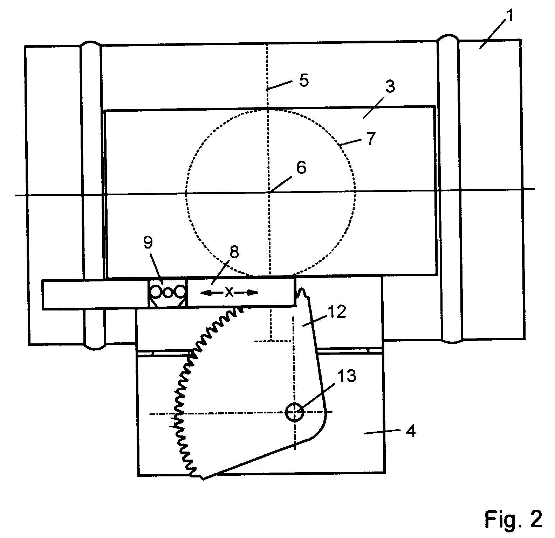

Über die Einstellvorrichtung 3 wird eine in Figur 2 gestrichelt dargestellte Einstellklappe 5 bedient, welche insbesondere je nach dem Querschnitt des Rohrabschnitts 1 rund oder oval sein kann. Dabei dreht diese Einstellklappe 5 um eine Drehachse 6 und ist über entsprechende Getriebeelemente mit dem Regler 4 verbunden. Beispielsweise kann der Drehachse 6 ein Zahnrad 7 aufgesetzt sein, welches im vorliegenden Ausführungsbeispiel ebenfalls nur gestrichelt angedeutet ist. Das Zahnrad 7 besitzt dabei eine Außenzahnung, die von entsprechenden Zähnen einer Zahnleiste 8 gekämmt wird.

Wird diese Zahnleiste 8 in Richtung x verschoben, so kann durch Drehung des Zahnrades 7 über die Drehachse 6 die Stellung der Einstellklappe 5 reguliert werden.

Jedoch sind hier auch andere Getriebeelemente denkbar, wie beispielsweise eine entsprechende Verbindungskette, wobei hier nur ein Kettenglied 9 angedeutet ist, welches die Zahnleiste 8 dann über entsprechende Umlenkrollen entweder mit dem Zahnrad 7 oder mit einem anderen Getriebeteil zum Drehen der Drehachse 6 verbindet.

Erfindungsgemäß gehört zu dem Getriebeelement auch ein nicht näher dargestellter Stoßdämpfer, über den sich die Tätigkeit der Getriebeelemente exakt regulieren läßt.

Oberhalb der Zahnleiste 8 ist im übrigen eine Skalierung 10 vorgesehen, auf der die Stellung der Einstellklappe 5 abgelesen werden kann.

Die Zahnleiste 8 besitzt ferner eine weitere Zahnung 11, welche von einer Zahnhalbrundscheibe 12 angegriffen wird. Diese Zahnhalbrundscheibe steht über eine weitere Drehachse 13 mit einem im Regler 4 vorgesehenen Stellmotor in Verbindung, wobei der Regler 4 selbst an der Einstellvorrichtung 3 angeflanscht ist und der gesamte Volumenstromregler 2 über eine Halbrundverbindungslasche 14 mit dem Rohrabschnitt 1 verbunden ist.

Anstelle der Zahnhalbrundscheibe 12 kann auch ein anderes Verbindungselement zur Zahnleiste, wie beispielsweise ein Zahnrad oder eine Zahnstange vorgesehen sein. Anbieten würden sich auch zwei gegeneinander arbeitende Zahnleisten.

Bei dem Motor handelt es sich bevorzugt um einen Elektromotor, welcher von 1 bis 10 Volt geschaltet werden kann. Die Getriebeeinrichtungen innerhalb der Einstellvorrichtung sind sehr exakt auf diesen Motor abgestimmt, wobei sich durch den angebrachten Stoßdämpfer der Regler exakt einjustieren läßt und die Regelgenauigkeit sehr hoch ist (Differenz unter 5%).

Der Vorteil dieses Volumenstromreglers liegt insbesondere darin, daß weder ein Meßkreuz noch eine zusätzliche Regeleinheit gebraucht wird. Erforderlich ist lediglich eine Einstellklappe, entweder rund oder oval, und ein handelsüblicher Stellmotor (elektrisch oder pneumatisch), welcher von 0 bis 10 Volt reguliert werden kann. Die Steuerung des Reglers erfolgt direkt vom Raumthermostat aus, wobei der Raumthermostat entsprechende Signale abgibt, wenn die Raumtemperatur zu niedrig oder zu hoch ist. Hierdurch wird der Stellmotor angetrieben, der über die Getriebeteile der Einstellvorrichtung die Einstellklappe schließt oder öffnet.

Der Volumenstromregler ist auch sehr wartungsfreundlich, da keine Verschmutzungen eines Meßkreuzes oder einer Regeleinheit möglich sind.

## Patentansprüche

1. Vorrichtung zum Regeln eines Volumenstromes in einem Führungsrohr (1), insbesondere zum Regeln des Luftvolumenstromes in einem Lüftungssystem bzw. einer Klimaanlage, wobei eine Einstellklappe (5) um eine Drehachse (6) drehbar, in dem Führungsrohr (1) angeordnet, dem Führungsrohr (1) eine Einstellvorrichtung (3) für die Einstellklappe (5) und der Einstellvorrichtung ein Regler (4) zugeordnet ist, wobei die Einstellvorrichtung (3) über Getriebeelemente (7, 8, 12, 13) mit dem Regler (4) gekoppelt ist,
dadurch gekennzeichnet,
daß ein der Drehachse (6) der Einstellklappe (5) aufsitzendes Zahnrad (7) von der Zahnleiste (8) direkt angegriffen, oder eine Zahnleiste (8) über eine Verbindungskette entweder mit dem Zahnrad (7) oder mit Umlenkrollen zum Drehen der Drehachse (6) verbunden ist und daß in die Zahnung (11) der Zahnleiste (8) bzw. Verbindungskette eine Zahnhalbrundescheibe (12), ein Zahnrad od.dgl. eingreift, welches einer Welle (13) eines im Regler (4) angeordneten Antriebes aufsitzt und der Einstellvorrichtung (3) eine Skalierung (10), und in der Einstellvorrichtung (3) zumindest einem der Getriebeelemente (7,8,12,13) zum Einstellen der Einstellklappe (5) ein Stoßdämpfer zugeordnet ist.

2. Vorrichtung nach Anspruch 1, dadurch gekennzeichnet, daß der Motor ein von 1-10 Volt regelbarer Elektromotor ist.

3. Vorrichtung nach Anspruch 1 oder 2, dadurch gekennzeichnet, daß der Regler (4) von einem Raumthermostat steuerbar ist.

## Claims

1. Apparatus for regulating a volumetric flow in a guide pipe (1), more especially for regulating the volumetric flow of air in a ventilation system or respectively an air-conditioning system, an adjustable flap (5) being disposed in the guide pipe (1) so as to be rotatable about a rotary axle (6), an adjusting device (3) for the adjustable flap (5) being associated with the guide pipe, and a regulator (4) being associated with the adjusting device, the adjusting device (3) being coupled with the regulator (4) via transmission elements (7, 8, 12, 13), characterised in that a toothed wheel (7), sitting on the rotary axle (6) of the adjustable flap (5), is contacted directly by the toothed bar (8), or a toothed bar (8) is connected via a connecting chain either to the toothed wheel (7) or to guide rollers for rotating the rotary axle (6), and in that a semicircular toothed disc (12), a toothed wheel or the like engages in the toothing (11) of the toothed bar (8) or repectively the connecting chain, said toothed wheel sitting on a shaft (13) of a drive disposed in the regulator (4), a scale (10) being associated with the adjusting device (3), and a shock absorber being associated with at least one of the transmission elements (7, 8, 12, 13) in the adjusting device (3) for adjusting the adjustable flap (5).

2. Apparatus according to claim 1, characterised in that the motor is an electric motor which can be regulated between 1 and 10 volts.

3. Apparatus according to claim 1 or 2, characterised in that the regulator (4) is controllable by a room thermostat.

## Revendications

1. Dispositif pour réguler un débit volumique dans une conduite (1) notamment pour réguler le débit volumique d'air dans un système de ventilation ou une installation de climatisation, un volet de réglage (5) tournant autour d'un axe de rotation (6) étant placé dans la conduite (1) et un dispositif de positionnement (3) du volet de réglage (5) et un régulateur (4) pour le dispositif de positionnement étant associés à la conduite, le dispositif de positionnement (3) étant couplé au régulateur (4) par des éléments de transmission (7, 8, 12, 13),
caractérisé en ce que
une roue dentée (7) montée sur l'axe de rotation (6) du volet de réglage (5) est en prise directe avec la crémaillère (8) ou une crémaillère (8) est reliée par une chaîne de liaison soit à la roue dentée (7), soit à des galets de renvoi pour faire tourner l'axe de rotation (6) et en ce que la denture (11) de la crémaillère (8) ou de la chaîne de liaison engrène avec un disque semi-circulaire denté (12), une roue dentée ou moyen analogue, montée sur l'axe (13) d'un moyen d'entraînement associé au régulateur (4) et au dispositif de positionnement (3) est associée une échelle (10) et pour le dispositif de positionnement (3), au moins pour l'un des éléments de transmission (7, 8, 12, 13), il est prévu un amortisseur pour régler le volet (5).

2. Dispositif selon la revendication 1,
caractérisé en ce que
le moteur est un moteur électrique réglé sous une tension comprise entre 1 et 10 volts.

3. Dispositif selon la revendication 1 ou 2,
caractérisé en ce que
le régulateur (4) est commandé par un thermostat d'ambiance.
